# EUROPÄISCHE PATENTSCHRIFT

(11) **EP 1 876 198 B1**
(45) Veröffentlichungstag und Bekanntmachung des Hinweises auf die Patenterteilung: **15.10.2008**
(21) Anmeldenummer: 07111503.4
(22) Anmeldetag: 02.07.2007
(51) Int. Cl.: C08G 77/388, C07F 7/08

(54) **Verfahren zur Herstellung aminofunktioneller Siloxane**
Process for preparing amino-functional siloxanes
Procédé de préparation de siloxanes aminofunctionels

(30) Priorität: 05.07.2006 DE 102006031104
(43) Veröffentlichungstag der Anmeldung: 09.01.2008
(73) Patentinhaber: Wacker Chemie AG, 81737 München (DE)
(72) Erfinder: Ziche, Wolfgang, Dr., 84489, Burghausen (DE); Lehnert, Robert, Dr., 01069, Dresden (DE); Baumann, Frank, Dr., 84529, Tittmoning (DE); Altmann, Stefan, Dr., 93104, Sünching (DE)
(74) Vertreter: Budczinski, Angelika

(56) Entgegenhaltungen:
- EP-A1- 1 201 699

## Beschreibung

Die Erfindung betrifft ein Verfahren zur katalysierten Herstellung von aminofunktionellen Siloxanen unter Einsatz von cyclischen Silazanen.

Aminoalkylpolysiloxane bzw. Aminoalkylsiliconharze sind in vielen Anwendungsbereichen brauchbar, einschließlich der Herstellung von Polyimiden und Polyetherimiden. Die kommerzielle Verwendung dieser Verbindungen in größerem Maßstab wird jedoch durch relativ kostenintensive Herstellungsverfahren verhindert.

Bekannt ist die basenkatalysierte Äquilibrierung von Octamethylcyclotetrasiloxan mit Bisaminopropyltetramethyldisiloxan, wie sie z.B. in US-A 5,512,650 beschrieben wird. Diese Reaktion hat den Nachteil, dass als Edukt das kostenintensive Bisaminopropyltetramethyldisiloxan verwendet wird. Hinzu kommen die langen Reaktionszeiten, die bei der Äquilibrierungsreaktion z.T. länger als 10 Stunden sind.

In WO 2005087842 A1 wird die kontinuierliche Herstellung aminofunktioneller Organosiloxane beschrieben. Nachteil des Verfahrens ist die Notwendigkeit des Einsatzes aufwändiger kontinuierlicher Verfahrensapparate, wie z.B. Extruder.

In EP-A-1 201 699 wird ein Verfahren zur Herstellung von aminofunktionellem Organosiloxan offenbart.

Gegenstand der Erfindung ist ein Verfahren zur Herstellung von aminofunktionellen Organosiloxanen der allgemeinen Formel

(SiO_{4/2})ₖ(R¹SiO_{3/2})ₘ(R¹₂SiO_{2/2})ₚ(R¹₃SiO_{1/2})_{q} [O_{1/2}SiR¹₂-R-NH₂]ₛ[O_{1/2}H]ₜ (I),

bei dem Organosiloxan der allgemeinen Formel

(SiO_{4/2})ₖ(R¹SiO_{3/2})ₘ(R1₂SiO_{1/2})ₚ(R¹₃SiO_{1/2})_{q}[O_{1/2}H]ᵣ (II)

mit cyclischem Silazan der allgemeinen Formel 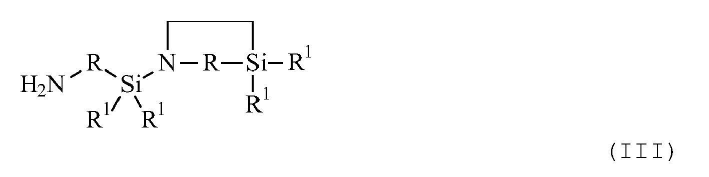 in Anwesenheit von Brönstedsäuren
umgesetzt wird, wobei
- **R**: gleich oder verschieden sein kann und einen divalenten Si-C und C-N gebundenen, gegebenenfalls cyano- oder halogensubstituierten C₃-C₁₅-Kohlenwasserstoffrest bedeutet, in dem eine oder mehrere, einander nicht benachbarte Methyleneinheiten durch Gruppen -O-, -CO-, -COO-, -OCO- oder -OCOO-, -S- oder -NR^{x}- ersetzt sein können und in dem eine oder mehrere, einander nicht benachbarte Methineinheiten durch Gruppen, -N=, -N=N- oder -P= ersetzt sein können, wobei zwischen Silicium-Atom und Stickstoffatom des Ringes mindestens 3 und maximal 6 Atome angeordnet sind,
- **R^{x}**: gleich oder verschieden sein kann und Wasserstoffatom oder einen gegebenenfalls mit -CN oder Halogen substituierten C₁-C₁₀-Kohlenwasserstoffrest bedeutet,
- **R¹**: gleich oder verschieden sein kann und Wasserstoffatom oder einen monovalenten, gegebenenfalls mit -CN, -NCO, -NR^{x}₂, -COOH, -COOR^{x}, -Halogen, -Acryl, -Epoxy, -SH, -OH oder -CONR^{x}₂ substituierten, Si-C-gebundenen C₁-C₂₀-Kohlenwasserstoffrest oder einen monovalenten, gegebenenfalls mit -CN, -NCO, -NR^{x}₂, -COOH, -COOR^{x}, -Halogen, -Acryl, -Epoxy, -SH, -OH oder -CONR^{x}₂ substituierten, Si-OC-gebundenen C₁-C₂₀-Kohlenwasserstoffoxyrest bedeutet, in denen jeweils eine oder mehrere, einander nicht benachbarte Methyleneinheiten durch Gruppen -O-, -CO-, -COO-, -OCO- oder -OCOO-, -S- oder -NR^{x}- ersetzt sein können und in denen eine oder mehrere, einander nicht benachbarte Methineinheiten durch Gruppen, -N=, -N=N- oder -P= ersetzt sein können,
- **s**: Werte von mindestens 1 hat,
- **r**: Werte von mindestens 1 hat,
**s + t** den Wert von r hat und
**k + m + p + q** Werte von mindestens 2 haben.

Die eingesetzten cyclischen Silazane der allgemeinen Formel (III) können nach bekannten Verfahren einfach und in hohen Ausbeuten hergestellt werden. Hierzu sei z.B. auf EP-B1 1 195 379 verwiesen.

Im cyclischen Silazan der allgemeinen Formel (III) kann **R** aliphatisch gesättigt oder ungesättigt, aromatisch, geradkettig oder verzweigt sein. **R** ist vorzugsweise ein unverzweigter C₃-C₆-Alkylenrest, der substituiert sein kann mit Halogenatomen, insbesondere Fluor und Chlor. Vorzugsweise sind zwischen Silicium-Atom und Stickstoffatom des Ringes 3 Atome angeordnet.

Die C₁-C₂₀-Kohlenwasserstoffreste und C₁-C₂₀-Kohlenwasserstoffoxyreste **R¹** können aliphatisch gesättigt oder ungesättigt, aromatisch, geradkettig oder verzweigt sein.

Besonders bevorzugt handelt es sich bei **R¹** um geradkettige oder verzweigte Kohlenwasserstoffreste mit 1 bis 6 Kohlenstoffatomen, insbesondere um den Methyl-, Ethyl-, Phenyl-, Vinyl- und Trifluorpropylrest, ganz besonders bevorzugt um den Methylrest.

Bevorzugt werden die Verbindungen der allgemeinen Formel (I) hergestellt, bei denen **R** einen Propylenrest bedeutet und **R¹** Methyl-, Ethyl-, Phenyl-, Vinyl- oder Trifluorpropylrest bedeutet.

Das erfindungsgemäß hergestellte aminofunktionelle Organosiloxan der Formel (I) kann linear, cyclisch oder verzweigt sein. Die Summe von k, m, p, q, s und t ist vorzugsweise eine Zahl von 2 bis 20000, insbesondere 8 bis 1000.

Eine bevorzugte Variante für ein verzweigtes Organosiloxan der Formel (I) ist Organosiloxanharz. Dieses kann aus mehreren Einheiten bestehen, wie in der Formel (I) gezeigt ist, wobei die relativen Molanteile der enthaltenen Einheiten durch die Indizes k, m, p, q, s und t bezeichnet werden. Dabei muss k + m > 0 sein.

Bevorzugt wird zur Herstellung eines solchen Harzes ein Organosiloxanharz der Formel (II) verwendet, bei dem 0,1 bis 20 % an Einheiten r, bezogen auf die Summe von k, m, p, q und r, enthalten sind und k + m > 0 ist. Bei der Reaktion von Verbindung der Formel (II) mit Silazan der Formel (III) werden Silanolgruppen durch Aminopropylsiloxygruppen ersetzt.

Bevorzugt werden bei der erfindungsgemäßen Reaktion von Verbindung der Formel (II) mit Silazan der Formel (III) Harze der Formel (I) erhalten, bei denen 5 Mol-% < k + m < 90 Mol-%, bezogen auf die Summe von k, m, p, q, s und t, ist und vorzugsweise t gleich 0 ist. In einem besonders bevorzugten Fall ist der Rest **R** ein Propylenrest und **R¹** ist ein Methylrest.

Will man nach dem erfindungsgemäßen Verfahren Harze herstellen, welche nur einen definierten Amingehalt haben, so wählt man die stöchiometrischen Verhältnisse zwischen Harz der Formel (II) und cyclischem Silazan so, dass der gewünschte Amingehalt erreicht wird. Restliche Si-OH Gruppen können gegebenenfalls im Produkt verbleiben.

Eine weitere bevorzugte Variante für ein aminofunktionelles Organosiloxan der Formel (I) ist lineares Organosiloxan der Formel (IV)

[H]ᵤ[H₂N-R-SiR¹₂]ᵥO(SiR¹₂O)ₙSiR¹₂-R-NH₂ (IV),

das erfindungsgemäß aus Organosiloxan der allgemeinen Formel

HO(R¹₂SiO)ₙR¹₂SiOH (V)

mit cyclischem Silazan der allgemeinen Formel (III) in Anwesenheit von Brönstedsäuren hergestellt wird, wobei
- **u**: 0 oder 1 ist,
- **v**: gleich 1-u ist und
- **n**: den durchschnittlichen Polymerisationsgrad bezeichnet und eine Zahl von 1 bis 20000 ist.

Vorzugsweise hat **u** den Wert 0.
**n** weist vorzugsweise Werte von 1 bis 10000, insbesondere 8 bis 2000, auf.

Die so dargestellten linearen Organosiloxane der Formel (IV) können im Wesentlichen durch 3 verschiedene Größen charakterisiert werden:
- Viskosität (bzw. Molekulargewicht),
- Amingehalt und
- Grad der Aminofunktionalität der Endgruppen, d.h. das Ausmaß der Substitution der Silanolendgruppen in (V) durch H₂N-R-SiR¹₂-Gruppen.

Von diesen Größen können jedoch bei linearem Organosiloxan der Formel (IV) nur zwei unabhängig voneinander variiert werden, d.h. bei festgelegter Viskosität und Funktionalität ist der Amingehalt festgelegt. Bei festgelegtem Amingehalt und Viskosität ist die Funktionalität festgelegt, und bei festgelegtem Amingehalt und Funktionalität ist die Viskosität festgelegt.

Die erfindungsgemäß hergestellten Verbindungen der allgemeinen Formel (IV) haben weiterhin den Vorteil, dass sie, wenn **u** > 0 ist, über kondensationsfähige Silanolendgruppen verfügen, die entweder mit sich selbst oder mit Verbindungen der allgemeinen Formel (V) kondensieren können, gegebenenfalls mit Unterstützung eines Katalysators. Dabei werden wiederum Verbindungen der allgemeinen Formel (IV) erhalten, welche dann ein höheres Molekulargewicht besitzen. In einem besonders bevorzugten Fall steht **n** für eine Zahl von 15 bis 50 vor der Kondensation und 50 bis 2000 nach der Kondensation.

Bei dem erfindungsgemäßen Verfahren zur Herstellung von aminofunktionellem Organosiloxan der Formel (I) ist die Menge der verwendeten Silazane der Formel (III) abhängig von der Menge der zu funktionalisierenden Silanolgruppen in Verbindung der Formel (II) bzw. (V). Will man jedoch eine vollständige Funktionalisierung der OH-Gruppen erreichen, so ist das Silazan in mindestens äquimolaren Mengen zuzugeben.

Bei äquimolarem Einsatz kann die Entfernung überschüssigen Silazans unterbleiben. Hierzu wird vorzugsweise der Gehalt an Si-OH-Gruppen im Silanol-terminierten Edukt z.B. durch Titration oder NMR-Spektroskopisch bestimmt, um so eine zumindest äquimolare Menge an Silazan zugeben zu können.

Verwendet man im erfindungsgemäßen Verfahren das cyclische Silazan im Überschuss, so kann das nicht abreagierte Silazan im Anschluss entweder abdestilliert werden oder hydrolysiert und dann, gegebenenfalls, abgezogen werden, was jedoch nicht bevorzugt ist.

Beispiele für die im erfindungsgemäßen Verfahren als Katalysatoren eingesetzte Brönstedsäuren sind Chlorwasserstoff, Ammoniumchlorid, saure Ionentauscherharze, Ammoniumformiat, Alkylammoniumformiate. Ebenfalls geeignet sind als Katalysatoren Chlorsilane, die in der Reaktion mit den in Verbindung der Formel (II) bzw. (V) vorhandenen Silanolgruppen und/oder dem in Spuren vorhandenem Wasser in situ Chlorwasserstoff in ausreichender Menge freisetzen können.

Bevorzugt handelt es sich bei dem erfindungsgemäß eingesetzten Katalysator um Chlorwasserstoff, Ammoniumchlorid und saure Ionentauscherharze, wobei Chlorwasserstoff und Ammoniumchlorid besonders bevorzugt sind, insbesondere Ammoniumchlorid.

Im erfindungsgemäßen Verfahren werden Brönstedsäuren in Mengen von bevorzugt 5 bis 1000 ppm, besonders bevorzugt 10 bis 500 ppm, insbesondere 50 bis 300 ppm, jeweils bezogen auf die Gesamtmasse des Reaktionsgemischs, eingesetzt.

Bevorzugt wird das erfindungsgemäße Verfahren bei Temperaturen von bevorzugt 0°C bis 100°C, besonders bevorzugt bei 10°C bis 100°C, insbesondere bei 40°C bis 100°C, durchgeführt.

Das erfindungsgemäße Verfahren wird bevorzugt beim Druck der umgebenden Atmosphäre, also zwischen 900 und 1100 hPa, durchgeführt; es kann aber auch - falls erwünscht - unter vermindertem Druck oder unter Überdruck gearbeitet werden.

Das erfindungsgemäße Verfahren wird bevorzugt unter Ausschluss von Luftfeuchtigkeit durchgeführt.

Bei dem erfindungsgemäßen Verfahren können alle Bestandteile beliebig miteinander vermischt werden.

Das erfindungsgemäße Verfahren kann diskontinuierlich oder kontinuierlich durchgeführt werden. Das Verfahren kann auch teilkontinuierlich durchgeführt werden, z.B. wenn die Mischung der Komponenten kontinuierlich und die vollständige Umsetzung diskontinuierlich erfolgt.

Das erfindungsgemäße Verfahren kann dabei sowohl unter Einbeziehung von Lösungsmitteln durchgeführt werden oder aber auch ohne die Verwendung von Lösungsmitteln in geeigneten Reaktoren.

Bei der Verwendung von Lösungsmitteln sind inerte, insbesondere aprotische Lösungsmittel wie aliphatische Kohlenwasserstoffe, wie z.B. Heptan oder Decan, und aromatische Kohlenwaserstoffe wie z.B. Toluol oder Xylol, bevorzugt. Ebenfalls können Ether wie THF, Diethylether oder MTBE verwendet werden. Falls Lösungsmittel eingesetzt werden, handelt es sich bevorzugt um Mengen, die genügen sollten, um eine ausreichende Homogenisierung der Reaktionsmischung zu gewährleisten. Lösungsmittel oder Lösungsmittelgemische mit einem Siedepunkt bzw. Siedebereich von bis zu 180°C bei 0,1 MPa sind bevorzugt.

Falls bei dem erfindungsgemäßen Verfahren Silazan der Formel (III) zu dem Organosiloxan der Formel (II) im Unterschuss zugegeben wird, können restliche, nicht umgesetzte Si-OH Gruppen im aminofunktionellen Organosiloxan der Formel (I) verbleiben oder mit anderen Silazanen der nachstehenden Formel (VI) umgesetzt werden: 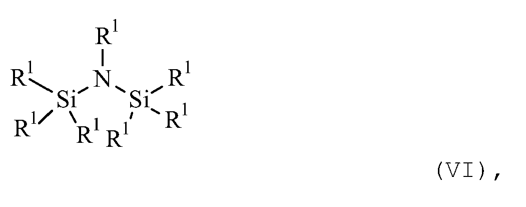 wobei R¹ gleich oder verschieden sein kann und eine der oben dafür angegebenen Bedeutung hat.

Man erhält so aminofunktionelles Organosiloxan der Formel

(SiO_{4/2})ₖ(R¹SiO_{3/2})ₘ(R¹₂SiO_{2/2})ₚ(R¹₃SiO_{1/2})_{q} [O_{1/2}SiR¹₂-R-NH₂]ₛ[O_{1/2}H]ₜ(O_{1/2}SiR¹₃)_{w} (VII),

wobei **R, R¹, k, m, p, q** und **s** die oben dafür angegebene Bedeutung haben, **t** größer oder gleich 0 ist, **w** größer 0 ist und die Summe **s + t + w** = **r** ist und **r** in der vorstehenden allgemeinen Formel (II) definiert ist.

Silazane der Formel (VI) können gleichzeitig mit cyclischem Silazan der Formel (III) oder nach der Umsetzung des Silazans der allgemeinen Formel (III) eingesetzt werden.

Werden lineare Organosiloxane der vorstehenden allgemeinen Formel (IV) mit sowohl Silazanen der allgemeinen Formel (III) als auch Silazanen der allgemeinen Formel (VI) umgesetzt, so erhält man Verbindungen der allgemeinen Formel

[R¹₃Si]ᵤ[H₂N-R-SiR¹₂]ᵥO(SiR¹₂O)ₙSiR¹₂-R-NH₂ (VIII),

wobei **R¹, R** und **n** wie oben definiert sind, **u** und **v** jeweils 0 oder 1 sind mit **u + v** gleich 1.

Diese Zweit-Terminierung kann aber auch gegebenenfalls unterbleiben, sie bietet jedoch hinsichtlich der Stabilität der Materialien bei erhöhten Temperaturen deutliche Vorteile, da Si-OH-Gruppen bei höheren Temperaturen zur Kondensation neigen und so die Viskosität der erhaltenen Lösungen erhöhen.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Die erfindungsgemäß hergestellten Siloxane können für alle Zwecke eingesetzt werden, für die auch bisher aminofunktionelle Siloxane eingesetzt worden sind.

Das erfindungsgemäße Verfahren hat den Vorteil, dass es einfach in der Durchführung ist.

Das erfindungsgemäße Verfahren hat den Vorteil, dass die erfindungsgemäß hergestellten Produkte direkt weiterverarbeitet werden können ohne Abtrennung des eingesetzten Katalysators.

Das erfindungsgemäße Verfahren hat den Vorteil, dass aminofunktionelle Siloxane sehr selektiv und in hohen Ausbeuten hergestellt werden können.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen. Die Aminzahl wird nach DIN 53176 bestimmt.

### Vergleichsbeispiel 1

1000 g bishydroxyterminiertes Polydimethylsiloxan mit einem Silanolgehalt von 12500 ppm und einem Wassergehalt von 1400 ppm wurden mit 102,5 g N-((3-Aminopropyl)-dimethylsilyl)-2,2-dimethyl-1-aza-2-silacyclopentan umgesetzt. ¹H-NMR und ²⁹Si-NMR zeigten, dass nach 3 Stunden noch 300 ppm Si-OH-Gruppen nicht zu Aminopropyl-Einheiten umgesetzt waren und noch restliches N-((3-Aminopropyl)-dimethylsilyl)-2,2-dimethyl-1-aza-2-silacyclopentan vorhanden war. Anschließend wurden zur Umsetzung des verbliebenen Silazans noch 2 ml Wasser zu der Reaktionslösung gegeben und kurz bei einem Druck von 20 mbar bei 60°C destilliert. Die Aminzahl beträgt 48,8.

### Beispiel 1

1000 g bishydroxyterminiertes Polydimethylsiloxan mit einem Silanolgehalt von 12500 ppm und einem Wassergehalt von 1400 ppm wurden mit 102,5 g N-((3-Aminopropyl)-dimethylsilyl)-2,2-dimethyl-1-aza-2-silacyclopentan und 100 ppm Ammoniumchlorid umgesetzt. ¹H-NMR- und ²⁹Si-NMR-Messungen zeigten, dass nach 3 Stunden alle Si-OH-Gruppen zu Aminopropyl-Einheiten umgesetzt waren und kein restliches N-((3-Aminopropyl)-dimethylsilyl)-2,2-dimethyl-1-aza-2-silacyclopentan vorhanden war. Die Aminzahl beträgt 49,8.

### Vergleichsbeispiel 2

5,003 g bishydroxyterminiertes Polydimethylsiloxan mit einem Silanolgehalt von 15100 ppm und einem Wassergehalt von 1400 ppm wurden mit 0,5899 g (1,77 % molarer Unterschuss) N-((3-Aminopropyl)-dimethylsilyl)-2,2-dimethyl-1-aza-2-silacyclopentan gemischt und bei 80°C temperiert. Von Zeit zu Zeit werden ca. 30 µl Probe entnommen, in CDCl₃ gelöst und mit ¹H-NMR analysiert. Die Ergebnisse sind Tabelle 1 zu entnehmen. Nach 400 Minuten waren noch 685 ppm Si-OH-Gruppen nicht zu Aminopropyl-Einheiten umgesetzt und noch restliches N-((3-Aminopropyl)-dimethylsilyl)-2,2-dimethyl-1-aza-2-silacyclopentan vorhanden.

**Tabelle 1**

| Zeit [min] | Mol% Silazan | [ppm] SiOH | Mol% SiOH |
|---|---|---|---|
| 21 | 3,84 | 9650 | 4,41 |
| 31 | 3,50 | 7747 | 3,54 |
| 42 | 3,07 | 6739 | 3,08 |
| 54 | 2,61 | 6215 | 2,84 |
| 75 | 2,23 | 5084 | 2,32 |
| 196 | 1,03 | 1930 | 0,88 |
| 319 | 0,59 | 1123 | 0,51 |
| 422 | 0,54 | 685 | 0,31 |

### Beispiel 2

5,0046 g bishydroxyterminiertes Polydimethylsiloxan mit einem Silanolgehalt von 15100 ppm und einem Wassergehalt von 1400 ppm wurden mit 0,5852 g (2,55 % molarer Unterschuss) N-((3-Aminopropyl)-dimethylsilyl)-2,2-dimethyl-1-aza-2-silacyclopentan und 100 ppm Ammoniumchlorid gemischt und bei 80°C temperiert. Von Zeit zu Zeit werden ca. 30 µl Probe entnommen, in CDCl₃ gelöst und mit ¹H-NMR analysiert. Die Ergebnisse sind Tabelle 2 zu entnehmen. Nach ca. 140 Minuten waren noch 1050 ppm Si-OH-Gruppen nicht zu Aminopropyl-Einheiten umgesetzt aber kaum restliches N-((3-Aminopropyl)-dimethylsilyl)-2,2-dimethyl-1-aza-2-silacyclopentan vorhanden.

**Tabelle 2**

| Zeit [min] | Mol% Silazan | [ppm] SiOH | Mol% SiOH |
|---|---|---|---|
| 20 | 1,41 | 3240 | 1,48 |
| 31 | 0,71 | 1799 | 0,82 |
| 43 | 0,16 | 1509 | 0,69 |
| 55 | 0,11 | 1287 | 0,59 |
| 67 | 0,06 | 1190 | 0,54 |
| 78 | 0,04 | 1119 | 0,51 |
| 90 | 0,03 | 1101 | 0,50 |
| 103 | 0,02 | 1071 | 0,49 |
| 140 | 0,01 | 1054 | 0,48 |
| 210 | 0,01 | 1026 | 0,47 |
| 263 | 0,01 | 1030 | 0,47 |
| 334 | 0,01 | 1015 | 0,46 |

### Vergleichsbeispiel 3

40 g bishydroxy-terminiertes Polydimethylsiloxan mit einem Silanolgehalt von 13300 ppm und einem Wassergehalt von 392 ppm wurden mit 3,8 g N-((3-Aminopropyl)-dimethylsilyl)-2,2-dimethyl-1-aza-2-silacyclopentan gemischt und bei 80°C temperiert. Nach 42 Stunden war mit NIR (FT-IR-Spectrometer IFS 66 mit NIR-Modul der Fa. Bruker-Optik) kein Silanol mehr nachweisbar.

### Beispiel 3

Zu 100 g N-((3-Aminopropyl)-dimethylsilyl)-2,2-dimethyl-1-aza-2-silacyclopentan werden 50 mg Dichlordimethylsilan (Me₂SiCl₂) gemischt. Zwei Tage darauf wurden 40 g bishydroxy-terminiertes Polydimethylsiloxan mit einem Silanolgehalt von 13300 ppm und einem Wassergehalt von 392 ppm mit 3,8 g der N-((3-Aminopropyl)-dimethylsilyl)-2,2-dimethyl-1-aza-2-silacyclopentan/-Me₂SiCl₂-Mischung gemischt und bei 80°C temperiert. Nach 25 Stunden war mit NIR (FT-IR-Spectrometer IFS 66 mit NIR-Modul der Fa. Bruker-Optik) kein Silanol mehr nachweisbar.

### Vergleichsbeispiel 4

950 kg bishydroxy-terminiertes Polydimethylsiloxan mit einem Silanolgehalt von 12000 ppm und einem Wassergehalt von 250 ppm wurden bei 80°C mit 80,1 kg N-((3-Aminopropyl)-dimethylsilyl)-2,2-dimethyl-1-aza-2-silacyclopentan umgesetzt. ¹H-NMR und ²⁹Si-NMR zeigten, dass nach 4 Stunden noch ca. 400 ppm Rest Si-OH-Gruppen vorhanden waren und ca. 3 mol-% restliches N-((3-Aminopropyl)-dimethylsilyl)-2,2-dimethyl-1-aza-2-silacyclopentan vorhanden war.

### Beispiel 4

950 kg bishydroxy-terminiertes Polydimethylsiloxan mit einem Silanolgehalt von 12000 ppm und einem Wassergehalt von 250 ppm (gleiche Charge wie aus Vergleichsbeispiel 4) wurden bei 80°C mit 80,1 kg N-((3-Aminopropyl)-dimethylsilyl)-2,2-dimethyl-1-aza-2-silacyclopentan und 100 g Ammoniumchlorid umgesetzt. ¹H-NMR und ²⁹Si-NMR zeigten, dass nach 4 Stunden nur noch ca. 20 ppm Rest Si-OH-Gruppen vorhanden waren und kein restliches N-((3-Aminopropyl)-dimethylsilyl)-2,2-dimethyl-1-aza-2-silacyclopentan vorhanden war.

## Patentansprüche

1. Verfahren zur Herstellung von aminofunktionellen Organosiloxanen der allgemeinen Formel
(SiO_{4/2})ₖ(R¹SiO_{3/2})ₘ(R¹₂SiO_{2/2})ₚ(R¹₃SiO_{1/2})_{q} [O_{1/2}SiR¹₂-R-NH₂]ₛ[O_{1/2}H]ₜ (I),
bei dem Organosiloxan der allgemeinen Formel
(SiO_{4/2})ₖ(R¹SiO_{3/2})ₘ(R¹₂SiO_{2/2})ₚ(R¹₃SiO_{1/2})_{q}[O_{1/2}H]ᵣ (II)
mit cyclischem Silazan der allgemeinen Formel 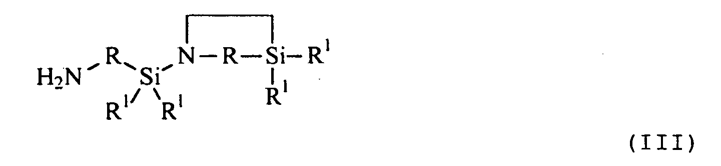 in Anwesenheit von Brönstedsäuren
umgesetzt wird, wobei
**R** gleich oder verschieden sein kann und einen divalenten Si-C und C-N gebundenen, gegebenenfalls cyano- oder halogensubstituierten C₃-C₁₅-Kohlenwasserstoffrest bedeutet, in dem eine oder mehrere, einander nicht benachbarte Methyleneinheiten durch Gruppen -O-, -CO-, -COO-, -OCO- oder -OCOO-, -S- oder -NR^{x}- ersetzt sein können und in dem eine oder mehrere, einander nicht benachbarte Methineinheiten durch Gruppen, -N=,-N=N- oder -P= ersetzt sein können, wobei zwischen Silicium-Atom und Stickstoffatom des Ringes mindestens 3 und maximal 6 Atome angeordnet sind,
**R^{x}** gleich oder verschieden sein kann und Wasserstoffatom oder einen gegebenenfalls mit -CN oder Halogen substituierten C₁-C₁₀-Kohlenwasserstoffrest bedeutet,
**R¹** gleich oder verschieden sein kann und Wasserstoffatom oder einen monovalenten, gegebenenfalls mit -CN, -NCO, -NR^{x}₂, -COOH, -COOR^{x}, -Halogen, -Acryl, -Epoxy, -SH, -OH oder -CONR^{x}₂ substituierten, Si-C-gebundenen C₁-C₂₀-Kohlenwasserstoffrest oder einen monovalenten, gegebenenfalls mit -CN, -NCO, -NR^{x}₂, -COOH, -COOR^{x}, -Halogen, -Acryl, -Epoxy, -SH, -OH oder -CONR^{x}₂ substituierten, Si-OC-gebundenen C₁-C₂₀-Kohlenwasserstoffoxyrest bedeutet, in denen jeweils eine oder mehrere, einander nicht benachbarte Methyleneinheiten durch Gruppen -O-, -CO-, -COO-, -OCO- oder -OCOO-, -S- oder -NR^{x}- ersetzt sein können und in denen eine oder mehrere, einander nicht benachbarte Methineinheiten durch Gruppen, -N=, -N=N- oder -P= ersetzt sein können,
**s** Werte von mindestens 1 hat,
**r** Werte von mindestens 1 hat,
**s + t** den Wert von r hat und
**k + m + p + q** Werte von mindestens 2 haben.

2. Verfahren nach Anspruch 1, bei dem Rest **R** ein unverzweigter C₃-C₆-Alkylenrest ist, der substituiert sein kann mit Halogenatomen.

3. Verfahren nach Anspruch 1 oder 2, bei dem Rest **R¹** einen Methyl-, Ethyl-, Phenyl-, Vinyl- oder Trifluorpropylrest bedeutet.

4. Verfahren nach einem oder mehreren der Ansprüche 1 bis 3, bei dem Brönstedsäuren in Mengen von 5 bis 1000 ppm, bezogen auf die Gesamtmasse des Reaktionsgemischs, eingesetzt werden.

5. Verfahren nach einem oder mehreren der Ansprüche 1 bis 4, **dadurch gekennzeichnet, dass** es sich bei den Brönstedsäuren um Ammoniumchlorid handelt.

6. Verfahren nach einem oder mehreren der Ansprüche 1 bis 5, wobei das Verfahren bei 0°C bis 100°C durchgeführt wird.

## Claims

1. Process for preparing amino-functional organosiloxanes of the general formula
(SiO_{4/2})ₖ(R¹SiO_{3/2})ₘ(R¹₂SiO_{2/2})ₚ(R¹₃SiO_{1/2})_{q} [O_{1/2}SiR¹₂-R-NH₂]ₛ[O_{1/2}H]ₜ (I),
in which organosiloxane of the general formula
(SiO_{4/2})ₖ(R¹SiO_{3/2})ₘ(R¹₂SiO_{2/2})ₚ(R¹₃SiO_{1/2})_{q}[O_{1/2} H]ᵣ (II)
is reacted with cyclic silazane of the general formula 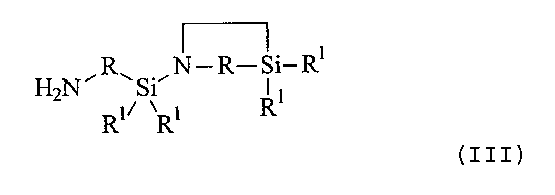 in the presence of Brønsted acids
where
**R** may be the same or different and is a divalent Si-C- and C-N-bonded, optionally cyano- or halo-substituted C₃-C₁₅-hydrocarbon radical in which one or more nonadjacent methylene units may be replaced by -O-, -CO-, -COO-, -OCO- or -OCOO-, -S- or -NR^{x}- groups and in which one or more nonadjacent methine units may be replaced by -N=,-N=N- or -P= groups, where at least 3 and at most 6 atoms are arranged between silicon atom and nitrogen atom of the ring,
**R^{x}** may be the same or different and is a hydrogen atom or an optionally -CN- or halogen-substituted C₁-C₁₀-hydrocarbon radical,
**R¹** may be the same or different and is hydrogen atom or a monovalent, optionally -CN-, -NCO-, -NR^{x}₂-, -COOH-, -COOR^{x}-, -halo-, -acryloyl-, -epoxy-, -SH-, -OH- or -CONR^{x}₂-substituted, Si-C-bonded C₁-C₂₀-hydrocarbon radical, or a monovalent, optionally -CN-, -NCO-, -NR^{x}₂-, -COOH-, -COOR^{x}-, -halo-, -acryloyl-, -epoxy-, -SH-, -OH- or -CONR^{x}₂-substituted, Si-OC-bonded C₁-C₂₀-hydrocarboxy radical, in each of which one or more nonadjacent methylene units may be replaced by -O-, -CO-, -COO-, -OCO- or -OCOO-, -S- or -NR^{x}- groups and in which one or more nonadjacent methine units may be replaced by -N=, -N=N- or -P= groups,
**s** has values of at least 1,
**r** has values of at least 1,
**s + t** has the value of r and
**k + m + p + q** have values of at least 2.

2. Process according to Claim 1, in which the R radical is an unbranched C₃-C₆-alkylene radical which may be substituted by halogen atoms.

3. Process according to Claim 1 or 2, in which the **R¹** radical is a methyl, ethyl, phenyl, vinyl or trifluoropropyl radical.

4. Process according to one or more of Claims 1 to 3, in which Brønsted acids are used in amounts of from 5 to 1000 ppm, based on the total mass of the reaction mixture.

5. Process according to one or more of Claims 1 to 4, **characterized in that** the Brønsted acid is ammonium chloride.

6. Process according to one or more of Claims 1 to 5, which is performed at from 0°C to 100°C.

## Revendications

1. Procédé pour la préparation d'organosiloxanes à fonction amino, de formule générale
(SiO_{4/2})ₖ(R¹SiO_{3/2})ₘ(R¹₂SiO_{2/2})ₚ(R¹₃SiO_{1/2})_{q} [O_{1/2}SiR¹₂-R-NH₂]ₛ[O_{1/2}H]ₜ (I),
dans lequel on fait réagir un organosiloxane de formule générale
(SiO_{4/2})ₖ(R¹SiO_{3/2})ₘ(R¹₂SiO_{2/2})ₚ(R¹₃SiO_{1/2})_{q}[O_{1/2}H]ᵣ (II)
avec un silazane cyclique de formule générale 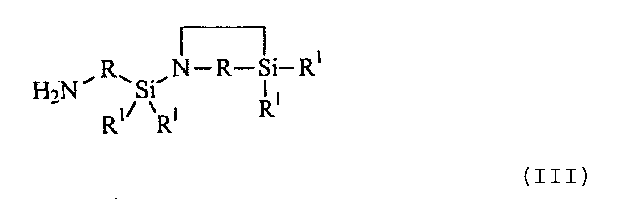 en présence d'acides de Brönsted,
**R** pouvant être le même ou différent et représentant un radical hydrocarboné en C₃-C₁₅ divalent, lié à Si-C et C-N, éventuellement substitué par halogène ou cyano, dans lequel une ou plusieurs unités méthylène non contiguës peuvent être remplacées par des groupes -O-, -CO-, -COO-, -OCO- ou -OCOO-, -S- ou -NR^{x}- et dans lequel une ou plusieurs unité méthine non contiguës peuvent être remplacées par des groupes -N=, -N=N- ou -P=, au moins 3 et au maximum 6 atomes étaient placés entre l'atome de silicium et l'atome d'azote du cycle,
**R^{x}** pouvant être le même ou différent et représentant un atome d'hydrogène ou un radical hydrocarboné en C₁-C₁₀ éventuellement substitué par -CN ou halogène,
**R¹** pouvant être le même ou différent et représentant un atome d'hydrogène ou un radical hydrocarboné monovalent en C₁-C₂₀ lié à Si-C, éventuellement substitué par -CN, -NCO, -NR^{x}₂, -COOH, -COOR^{x}, -halogène, -acryle, -époxy, -SH, -OH ou -CONR^{x}₂ ou un radical hydrocarboné monovalent en C₁-C₂₀ lié à Si-OC, éventuellement substitué par -CN, -NCO, -NR^{x}₂, -COOH, -COOR^{x}, -halogène, -acryle, -époxy, -SH, -OH ou -CONR^{x}₂, dans lesquels chaque fois une ou plusieurs unités méthylène non contiguës peuvent être remplacées par des groupes -O-, -CO-, -COO-, -OCO- ou -OCOO-, -S- ou -NR^{x}- et dans lesquels une ou plusieurs unité méthine non contiguës peuvent être remplacées par des groupes -N=, -N=N- ou -P=,
**s** a des valeurs d'au moins 1,
**r** a des valeurs d'au moins 1,
**s + t** a la valeur de **r** et
**k + m + p + q** ont des valeurs d'au moins 2.

2. Procédé selon la revendication 1, dans lequel le radical R est un radical alkylène en C₃-C₆ non ramifié qui peut être substitué par des atomes d'halogène.

3. Procédé selon la revendication 1 ou 2, dans lequel le radical R¹ représente un radical méthyle, éthyle, phényle, vinyle ou trifluoropropyle.

4. Procédé selon une ou plusieurs des revendications 1 à 3, dans lequel on utilise les acides de Brönsted en des quantités de 5 à 1 000 ppm, par rapport à la masse totale du mélange réactionnel.

5. Procédé selon une ou plusieurs des revendications 1 à 4, **caractérisé en ce que** l'acide de Brönsted consistent en chlorure d'ammonium.

6. procédé selon une ou plusieurs des revendications 1 à 5, dans lequel le procédé est effectué à une température de 0 °C à 100 °C.
